# FASCICULE DE BREVET EUROPEEN

(11) **EP 0 625 738 B1**
(45) Date de publication et mention de la délivrance du brevet: **03.12.1997**
(21) Numéro de dépôt: 94107418.9
(22) Date de dépôt: 13.05.1994
(51) Int. Cl.: G04G 13/02, H02K 33/16, B06B 1/04

(54) **Alarme silencieuse électromagnétique**
Stiller elektromagnetischer Alarm
Silent electromagnetic alarm

(30) Priorité: 18.05.1993 CH 1512/93
(43) Date de publication de la demande: 23.11.1994
(73) Titulaire: ASULAB S.A., CH-2501 Bienne (CH)
(72) Inventeur: Born, Jean-Jacques, CH-1110 Morges (CH)
(74) Mandataire: Patry, Didier Marcel Pierre

(56) Documents cités:
- EP-A- 0 437 033
- FR-A- 2 182 600
- PATENT ABSTRACTS OF JAPAN vol. 009, no. 236 (P-390) 21 Septembre 1985 & JP-A-60 089 791 (SEIKOUSHIYA K.K.)

## Description

La présente invention concerne une alarme silencieuse ou alarme non sonore, et plus particulièrement une alarme silencieuse destinée à équiper un dispositif de fourniture d'informations, telles qu'une information horaire.

L'invention est donc particulièrement adaptée pour être intégrée dans une pièce d'horlogerie de faible épaisseur ou dans un dispositif de recherche de personne aussi de petite taille qui est appelé sous la dénomination britannique "pager" et qui est conformé pour être porté au bras d'un utilisateur.

Les alarmes classiques, que ce soit celles qui équipent les pièces d'horlogerie fournissant une information essentiellement horaire ou celles qui équipent les appareils de recherche de personne, sont conformées pour annoncer, par la fourniture d'un son choisi dans une gamme ou selon une tonalité particulière, un événement particulier, tel qu'une heure de réveil ou un appel radiotéléphoné.

Ce type d'alarme présente l'inconvénient essentiel de pouvoir être perçu par l'environnement de l'utilisateur, ce qui, dans la fonction réveil, ne permet pas de différencier l'utilisateur parmi d'autres personnes. En outre, dans son application à un dispositif de recherche de personne (pager), ce type d'alarme sonore prévient, en même temps que l'utilisateur, l'ensemble des personnes présentes, par exemple lors d'une séance de travail, de l'appel reçu par cet utilisateur.

Ainsi, on comprend que ce type d'alarme sonore présente l'inconvénient de ne pas être discret et que, en étant perceptible par d'autres personnes que l'utilisateur, il ne permet pas une différenciation aisée de l'un des utilisateurs au sein des autres personnes.

Pour pallier cela, il a été proposé des alarmes silencieuses non sonores qui comportent des moyens moteurs entraînant une masse conformée de telle sorte que, lors de son déplacement, cette masse fournisse un effet vibratoire qui peut être transmis à l'utilisateur. La vibration perceptible par cet utilisateur le prévient donc lui, et lui seul, de l'heure du réveil ou de l'appel reçu.

Une alarme non sonore de ce type est décrite dans la demande EP 0 349 230. Cette alarme comporte un moteur piézo-électrique qui entraîne en rotation une masse excentrique montée mobile sur un arbre.

A cause de la configuration coaxiale de cet arrangement, celui-ci présente un encombrement en hauteur relativement important si bien qu'il nécessite, pour son montage dans une pièce d'horlogerie, un aménagement spécifique, voire une reconstruction complète de cette pièce.

En outre, cet agencement nécessite la réalisation d'un moteur piézo-électrique dont la fabrication fait appel à des techniques relativement complexes. De plus, on sait que les moteurs piézo-électriques fonctionnent sur le principe du frottement et qu'ils font l'objet d'une usure importante et donc ont une durée de vie limitée.

Enfin, cet agencement requiert un montage extrêmement précis de la masse sur son arbre, qu'elle sollicite fortement à cause des mouvements de vibration.

La présente invention a donc pour but de fournir une alarme non sonore de conception simple, pouvant équiper des dispositifs de fourniture d'informations, tels qu'une pièce d'horlogerie sans nécessiter de modification importante de sa structure, et pouvant être réalisée à un coût le plus faible possible, par des opérations automatisées à grande vitesse.

A cet effet, l'invention a pour objet une alarme non sonore destinée à équiper un dispositif de fourniture d'informations, telles qu'une information horaire, selon le préambule et la partie caractérisante de la revendication 1.

Mais d'autres caractéristiques et avantages de l'invention apparaîtront mieux à la lecture de la description détaillée qui suit, prise en référence aux dessins annexés qui sont donnés à titre d'exemple, et dans lesquels :
- la figure 1 représente une vue de côté d'une alarme non sonore, selon l'invention, équipant une pièce d'horlogerie représentée en coupe;
- la figure 2 est une vue de dessus de l'alarme non sonore selon l'invention, représentée à la figure 1;
- la figure 3 est une vue de côté de l'alarme de la figure 2; et
- la figure 4 est une vue de dessus d'un support dont est pourvue l'alarme des figures 1 à 3.

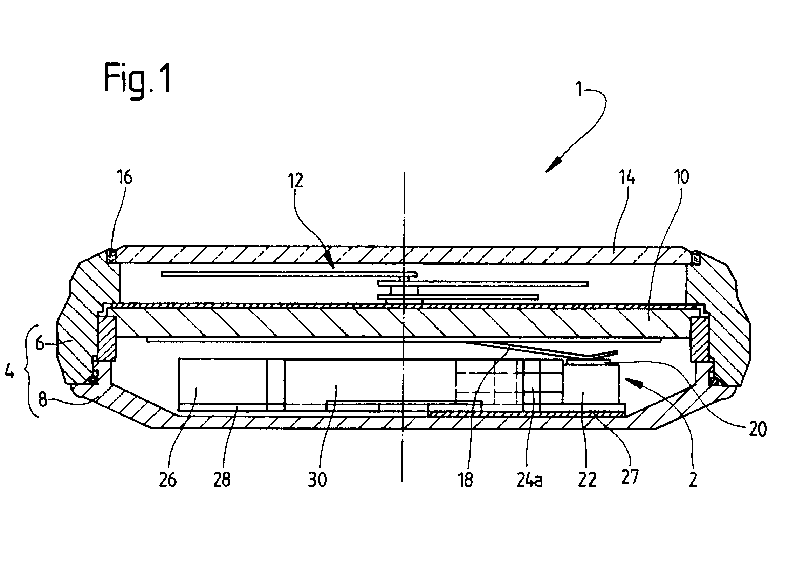

Se référant tout d'abord à la figure 1, on décrira brièvement une pièce d'horlogerie, repérée par la référence générale 1 et pourvue d'une alarme non sonore selon l'invention qui est repérée par la référence générale 2.

La pièce d'horlogerie 1 comporte une boîte 4 constituée d'une carrure 6 et d'un fond 8 fixé de façon classique à la carrure.

La pièce d'horlogerie 1 comporte en outre un mouvement horométrique 10 qui est monté dans la carrure 6 et qui est conformé pour entraîner de façon classique des moyens 12 de fourniture d'une ou de plusieurs informations, notamment d'une information horaire. Les moyens 12 sont constitués par des aiguilles respectivement des heures, des minutes et des secondes. Ces aiguilles peuvent fournir d'autres informations qu'une information horaire et elles peuvent en outre être associées à un affichage digital du type opto-électronique, ici non représenté.

La boîte 4 est fermée du côté opposé au couvercle 8 par une glace 14 engagée dans la carrure 6 avec interposition d'un joint d'étanchéité 16. Le mouvement horométrique 10 comporte une source d'énergie, non représentée, telle qu'une pile, dont l'un des pôles est électriquement relié à une languette de contact électrique 18 qui est assujettie mécaniquement au mouvement 10.

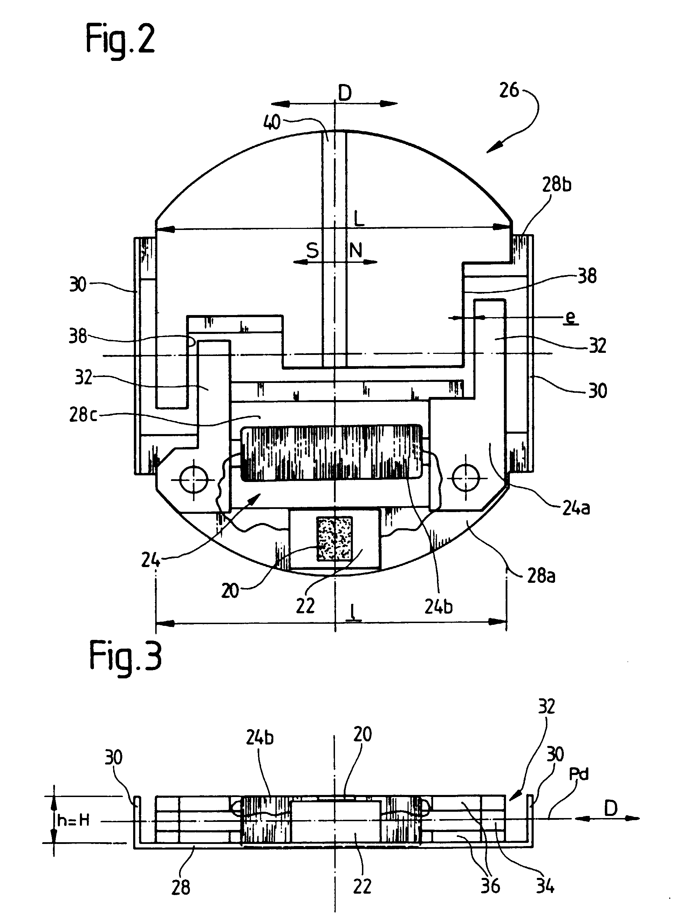

Cette languette de contact électrique 18 repose élastiquement sur un plot de contact 20 (figure 2) ménagé sur un boîtier électronique de commande 22 conformé pour piloter l'alarme non sonore 2, selon l'invention.

En se référant désormais aux figures 2 et 3, on décrira de façon plus détaillée l'alarme non sonore 2 équipant la pièce d'horlogerie 1.

L'alarme non sonore 2 comporte des moyens moteurs 24 qui peuvent être commandés électriquement par le boîtier électronique de commande 22 et qui sont associés à une masse 26 qui, comme on le comprendra ci-après, peut être mise en mouvement pour fournir, sous l'effet des moyens moteurs 24, un effet vibratoire perceptible par l'utilisateur, via le fond 8 de la boîte 4 appartenant à la pièce d'horlogerie 1 selon l'invention.

Les moyens moteurs 24 comportent un noyau 24a et une bobine 24b enroulée de façon classique autour du noyau 24a.

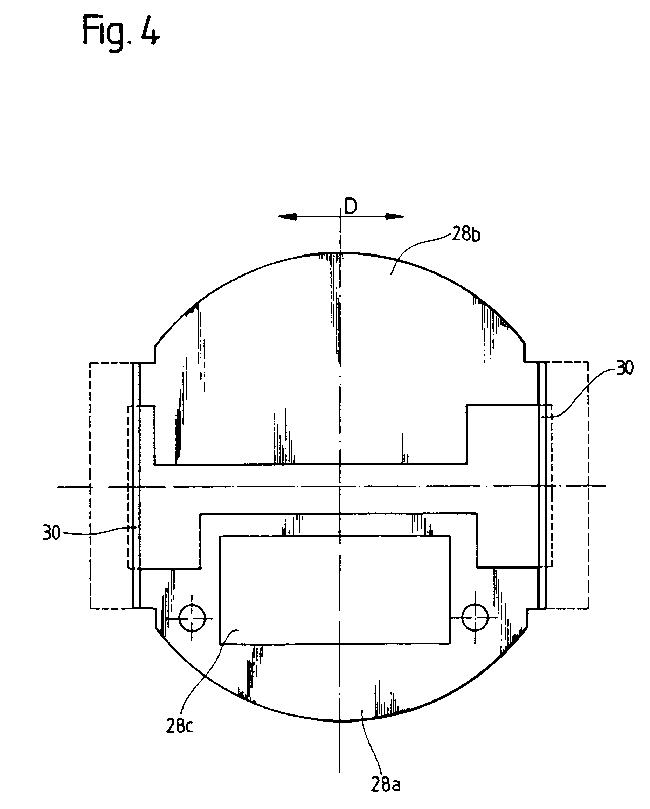

De façon avantageuse, les moyens moteurs 24 sont donc constitués par un moteur électromagnétique 24a, 24b qui est monté fixement sur un support 28 représenté de façon plus détaillé, en vue de dessus, à la figure 4.

Le support 28 est une pièce monobloc multifonctionnelle qui comporte une partie fixe 28a (figures 2 et 4) sur laquelle est monté fixement, dans l'assemblage final, le moteur électromagnétique 24, et notamment le noyau 24a, ainsi que le boîtier électronique de commande 22.

Le support 28 comporte en outre une partie mobile 28b sur laquelle est montée fixement la masse 26. On précisera ici que le moteur électromagnétique 24, et notamment son noyau de bobine 24a, ainsi que la masse 26 sont fixés au support 28, et notamment aux parties respectivement fixe 28a et mobile 28b par l'intermédiaire de moyens de fixation par soudage électrique, dit soudage par points. On précisera ici en outre que le noyau de bobine 24a, la masse 26 et le support 28 sont des pièces embouties obtenues par déformation à froid, et qui peuvent donc être réalisées en grande quantité par des techniques de fabrication industrielles à grande vitesse, le montage de ces éléments qui sont de conception simple, pouvant se faire de façon automatisée.

La partie fixe 28a est en outre destinée à être assujettie, par vissage ou collage, au fond 8 de la pièce d'horlogerie 1 avec interposition d'une entretoise 27 pour éviter que la partie mobile 28a ne frotte sur le fond 8, lorsqu'elle est mise en mouvement.

Comme on le remarque sur les figures 2 à 4, les deux parties respectivement fixe 28a et mobile 28b sont liées entre elles par des éléments de liaison 30 qui sont constitués par des lames ou ailes venant de matière avec les deux parties 28a et 28b, et qui sont réalisées en même temps que celles-ci dans leur épaisseur par les mêmes opérations d'emboutissage. On a représenté sur la figure 4 ces éléments de liaison élastique 30 en traits interrompus après qu'ils aient été obtenus par les différentes opérations d'emboutissage et avant qu'ils ne soient recourbés et pliés pour s'étendre perpendiculairement aux parties 28a et 28b. Comme on le comprendra par la suite, la disposition de ces éléments de liaison élastique 30 et leur orientation par rapport aux parties respectivement fixe 28a et mobile 28b permet un déplacement latéral sensiblement en translation de la partie mobile 28b par rapport à la partie fixe 28a, comme représenté par la flèche D, aux figures 2 à 4.

La partie fixe 28a comporte en outre un évidemment central 28c qui est destiné à recevoir la bobine 24b du moteur électromagnétique 24.

Comme on le comprend et comme cela ressort clairement des figures 2, 3 et 4, le support monobloc 28 est réalisé d'une pièce dans une feuille plane par exemple métallique, de faible épaisseur et les languettes élastiques 30 qui viennent de matière avec les deux parties fixe 28a et mobile 28b ne présentent aucune attache mécanique rapportées ni avec la masse 26, ni avec le moteur 24. Le support 28 constitue donc un étrier ou berceau de fixation plat multifonctionnel, de très faible épaisseur, assurant la fixation des composants de l'alarme 2 sur le fond d'une boîte de montre 1 et leur positionnement relatif, avec un mouvement élastique de rappel de la masse par rapport au moteur.

En se référant désormais aux figures 2 et 3, on remarquera que le noyau de bobine 24a comporte deux bras 32 qui s'étendent vers la masse 26, parallèlement aux éléments de liaison élastique 30 du support 28. Chaque bras 32 est formé d'un empilement de trois pièces obtenues respectivement par emboutissage, dont l'une au centre, référencée 34, constitue le noyau de bobine à proprement parlé en traversant la bobine 24b et en étant commune au bras opposé, tandis que les deux autres, toutes deux référencées 36, sont montées de part et d'autre de la pièce intermédiaire 34 et sont assujetties à celle-ci, par exemple par soudage ou collage.

Les bras 32 constituent des épanouissements polaires qui s'étendent en regard de surfaces polaires correspondantes, référencées 38, ménagées sur la masse 26 et s'étendant de même parallèlement aux deux bras 32 ainsi que parallèlement aux éléments de liaison élastique 30. On notera ici que les deux surfaces polaires 38 de la masse 26 sont ménagées d'un même côté (à gauche sur la figure 2) par rapport aux bras correspondants 32.

Les surfaces polaires 38 sont formées par des découpages appropriés de la masse 26, obtenus par les opérations d'emboutissage conduisant à la fabrication de cette masse.

Entre la masse 26 et les bras 32 qui forment des épanouissement polaires du noyau de bobine 24a sont ménagés des entrefers e qui s'étendent de même parallèlement aux éléments de liaison élastique 30.

Dans le mode de réalisation représenté, la masse 26 comporte en outre un aimant permanent 40 qui s'étend dans la longueur de l'alarme 2, c'est-à-dire parallèlement aux éléments de liaison élastique 30 et de façon normale à la direction de déplacement D de la masse 26.

L'aimant permanent 40 présente un axe d'aimantation permanent nord-sud (indiqué par la flèche S-N) qui est orienté de façon parallèle à la direction de déplacement D.

Dans un mode de réalisation non représenté, l'aimant 40 peut être omis.

On précisera encore que la masse 26 s'étend sur une hauteur H (figure 3) égale à la hauteur h des bras polaires 32. Ainsi, on forme des entrefers e ayant une surface optimale qui assure un rendement élevé au moteur 24. On comprend que, sous la commande du boîtier électronique de commande 22, la bobine peut être alimentée électriquement et faire naître un flux magnétique qui peut circuler à l'intérieur du noyau de bobine 24a et peut se refermer en passant par la masse 26, via les entrefers e. Aussi sous cette alimentation électrique qui dans le mode de réalisation décrit est du type alternative, la masse 26 se rapproche des bras polaires 32 et met sous contrainte les éléments de liaison élastique 30, puis la masse 26 est ramenée vers sa position initiale et ainsi de suite pour osciller autour de cette position dans un mouvement latéral de va-et-vient. Par conséquent, en choississant une alimentation de forme appropriée en fréquence et en amplitude, on crée un effet vibratoire dans la boîte de la pièce d'horlogerie 1, grâce au déplacement de la masse 26 qui a, à la fois, une fonction de masse vibrante et de shunt magnétique dans le circuit électromagnétique de l'alarme non sonore 2. On notera que le déplacement de la masse 26 est un déplacement oscillant quasi-linéaire qui se produit dans un plan de déplacement Pd dans lequel s'étend la direction de déplacement D de la masse 26.

On notera que la quasi-totalité des composants de l'alarme non sonore 2 s'étendent dans le plan de déplacement Pd; la masse 26 étant, en effet, ménagée dans le même plan que celui dans lequel s'étendent aussi bien la bobine 24b que le noyau 24a du moteur électromagnétique 24. Tous ces composants se trouvent donc sensiblement au même niveau. On a donc fourni une configuration imbriquée essentiellement plane, de faible épaisseur et de forme compacte. On note en effet que la masse 26 présente une largeur L sensiblement égale à celle, référencée l, du moteur électromagnétique 24.

On précisera ici que la pièce d'horlogerie 1 peut en outre comporter ou constituer un dispositif de réception d'appel (ou pager), ou un autre dispositif de fourniture d'informations.

On remarque par ailleurs que l'alarme non sonore selon l'invention convient particulièrement bien à une application horlogère puisque sa forme essentiellement plane et peu épaisse permet une intégration facile dans une boîte de montre sans modification majeure des autres composants. On précisera ici que la figure 1 n'est pas une représentation à l'échelle, l'alarme non sonore ayant été représentée de façon agrandie pour faciliter la lecture des dessins. A titre d'indication uniquement, une alarme non sonore de ce type a pu être réalisée avec une hauteur totale d'environ 1,5 mm.

## Revendications

1. Alarme non sonore destinée à équiper un dispositif de fourniture d'informations, telles qu'une information horaire, comportant des moyens moteurs (24) qui peuvent être commandés électriquement et qui sont associés à une masse (26) pouvant être mise en mouvement pour fournir, sous l'action des moyens moteurs (24), un effet vibratoire, caractérisée en ce que les moyens moteurs (24) sont constitués par un moteur électromagnétique comportant une bobine (24b) et un noyau (24a) supportant cette bobine, ce moteur (24a, 24b) étant monté fixement sur un support (28) qui comporte des éléments de liaison élastique (30) associés à ladite masse (26), en ce que ledit noyau (24a) du moteur et ladite masse (26) sont situés sensiblement dans un même plan (Pd) et en ce que ledit noyau (24a), ladite masse (26) et lesdits éléments de liaison élastique (30) sont conformés et agencés de façon que ladite masse (26) effectue un mouvement oscillant quasi linéaire dans ce plan (Pd) lors de la commande dudit moteur (24a, 24b).

2. Alarme selon la revendication 1, caractérisée en ce que ledit support (28) est une pièce monobloc multifonctionnelle ayant la forme d'un étrier comportant une partie fixe (28a) sur laquelle est monté ledit moteur (24) et une partie mobile (28b) sur laquelle est montée ladite masse (26), les deux parties respectivement fixe (28a) et mobile (28b) étant liées entre elles par les éléments de liaison élastique (30) qui sont constitués par des lames recourbées venant de matière avec lesdites parties fixe (28a) et mobile (28b).

3. Alarme selon la revendication 1 ou 2, caractérisée en ce que ledit le noyau (24a) du moteur électromagnétique (24a, 24b) comporte deux bras (32) qui s'étendent parallèlement aux éléments de liaison élastique (30) du support (28) et qui forment deux pièces polaires destinées à constituer un entrefer (e) avec des surfaces correspondantes (38) de la masse (26).

4. Alarme selon l'une des revendications 1 à 3, caractérisée en ce que la masse (26) est une pièce de forme essentiellement plane s'étendant sur toute la largeur du noyau (24a) et de hauteur sensiblement égale à celle du moteur.

5. Alarme selon l'une quelconque des revendications précédentes, caractérisée en ce que le support (28), le noyau (24a) et la masse (26) sont constitués par des pièces embouties.

6. Alarme selon la revendication 5, caractérisée en ce que le noyau (24a) et la masse (26) sont soudés au support (28).

7. Alarme selon la revendication 1, caractérisée en ce que le support (28) est réalisé dans une feuille métallique.

## Patentansprüche

1. Lautlose Alarmvorrichtung, die dazu bestimmt ist, eine Vorrichtung zum Liefern von Informationen, wie einer Zeitinformation, zu bestücken, umfassend Motormittel (24), die elektrisch ansteuerbar sind und die einer Masse (26) zugeordnet sind, welche in eine Bewegung versetzbar ist, um unter der Wirkung der Motormittel (24) einen Vibrationseffekt zu bewirken, dadurch gekennzeichnet, daß die Motormittel (24) von einem elektromagnetischen Motor mit einer Spule (24b) und einem diese Spule tragenden Kern (24a) gebildet sind, welcher Motor (24a, 24b) fest auf einem Support (28) montiert ist, welcher elastische Verbindungselemente (30), die der Masse (26) zugeordnet sind, umfaßt, daß der Kern (24a) des Motors und die Masse (26) im wesentlichen in einer gemeinsamen Ebene (Pd) befindlich sind und daß der Kern (24a), die Masse (26) und die elastischen Verbindungselemente (30) derart ausgebildet und angeordnet sind, daß die Masse (26) eine quasi lineare Oszillationsbewegung in dieser Ebene (Pd) bei Ansteuerung des Motors (24a, 24b) ausführt.

2. Alarmvorrichtung nach Anspruch 1, dadurch gekennzeichnet, daß der Support (28) ein multifunktionelles Monoblockteil in Form eines Trägers ist, der eine feste Partie (28a) umfaßt, auf der der Motor (24) montiert ist und eine bewegliche Partie (28b) umfaßt, auf der die Masse (26) montiert ist, welche beiden Partien, die feste (28a) und die bewegliche (28b), miteinander durch die elastischen Verbindungselemente (30) verbunden sind, die von gebogenen Lamellen gebildet werden, die einstükkig mit der festen (28a) und beweglichen (28b) Partie ausgebildet sind.

3. Alarmvorrichtung nach Anspruch 1 oder 2, dadurch gekennzeichnet, daß der Kern (24a) des elektromagnetischen Motors (24a, 24b) zwei Arme (32) umfaßt, die sich parallel zu den elastischen Verbindungselementen (30) des Supports (28) erstrecken und die zwei Polstücke bilden, dazu bestimmt, mit den entsprechenden Oberflächen (38) der Masse (26) einen Luftspalt (e) zu bilden.

4. Alarmvorrichtung nach einem der Ansprüche 1 bis 3, dadurch gekennzeichnet, daß die Masse (26) ein im wesentlichen ebenes Teil ist, das sich auf der gesamten Breite des Kerns (24a) und mit einer Höhe im wesentlichen gleich jener des Motors erstreckt.

5. Alarmvorrichtung nach einem der vorangehenden Ansprüche, dadurch gekennzeichnet, daß der Support (28), der Kern (24a) und die Masse (26) von Trägeteilen gebildet sind.

6. Alarmvorrichtung nach Anspruch 5, dadurch gekennzeichnet, daß der Kern (24a) und die Masse (26) an dem Support (28) angeschweißt sind.

7. Alarmvorrichtung nach Anspruch 1, dadurch gekennzeichnet, daß der Support (28) aus einem Blech hergestellt ist.

## Claims

1. Non-acoustic alarm intended to equip a device supplying information such as time information, including motor means (24) which can be electrically driven and which are associated with a mass (26) adapted to be set in motion under the action of the motor means (24) in order to furnish a vibratory effect, characterized in that the motor means (24) are constituted by an electromagnetic motor including a winding (24b) and a core (24a) supporting such winding, such motor (24a, 24b) being fixedly mounted on a support (28) including elastic coupling elements (30) which are associated with said mass (26), in that said core (24a) of the motor and said mass (2) are substantially situated in a same plane (Pd) and in that said core (24a), said mass (26) and said elastic coupling elements (30) are designed and arranged so that said mass (26) assumes a quasi-linear oscillating motion in this plane (Pd) when the motor is operated.

2. Alarm according to claim 1, characterized in that said support (28) is a single multifunctional piece having the form of a stirrup including a fixed portion (28a) on which said motor (24) is mounted and a movable portion (28b) on which said mass (26) is mounted, the two respectively fixed (28a) and movable (28b) portions being coupled together by the elastic coupling elements (30) which are constituted by bent blades integral with said fixed (28a) and movable (28b) portions.

3. Alarm according to claim 1 or 2, characterized in that said said core (24a) of the electromagnetic motor (24a, 24b) includes two arms (32) which extend parallel to the elastic coupling elements (30) of the support (28) and which form two pole pieces intended to constitute a gap (e) with corresponding surfaces (38) of the mass (26).

4. Alarm according to any of claims 1 to 3, characterized in that the mass (26) is a piece of basically planar form extending over the entire width of the core (24a) and ofa height substantially equal to that of the motor.

5. Alarm according to any one of the preceding claims, characterized in that the support (28), the core (24a) and the mass (26) are constituted by stamped parts.

6. Alarm according to claim 5, characterized in that the core (24a) and the mass (26) are welded to the support (28).

7. Alarm according to claim 1, characterized in that the support (28) is formed in a metallic sheet.
